# EUROPEAN PATENT SPECIFICATION

(11) **EP 2 873 495 B1**
(45) Date of publication and mention of the grant of the patent: **04.10.2017**
(21) Application number: 14192658.4
(22) Date of filing: 11.11.2014
(51) Int. Cl.: B25F 5/02

(54) **Work implement**
Arbeitsvorrichtung
Outil de travail

(30) Priority: 15.11.2013 JP 2013237054
(43) Date of publication of application: 20.05.2015
(73) Proprietor: HITACHI KOKI CO., LTD., Tokyo 108-6020 (JP)
(72) Inventor: Aoki, Yoshiki, Ibaraki, 312-8502 (JP); Sakai, Masato, Ibaraki, 312-8502 (JP); Kakefuda, Shinichi, Ibaraki, 312-8502 (JP); Ebata, Tetsuo, Ibaraki, 312-8502 (JP)
(74) Representative: Parker, Andrew James

(56) References cited:
- EP-A1- 1 477 282
- WO-A1-2010/025742
- GB-A- 2 312 188
- GB-A- 2 423 039
- US-A1- 2002 174 521
- US-A1- 2005 258 203

## Description

### TECHNICAL FIELD OF THE INVENTION

The present invention relates to a holding fixture for work implement, which is attached to a portable work implement and used to fix it, or relates to a work implement having a holding fixture for work implement.

### BACKGROUND OF THE INVENTION

An electric work implement such as an electric drill, and a work implement such as an impact wrench which is actuated by compressed air are each carried and used by a worker, and each work implement weighs several or more kilograms. When for example such a work implement is not in use, it must be securely set and fixed in place. An electric torch as work environment lighting is usually smaller in weight than an electric drill, etc., but an electric torch with a heavy battery serving as an electric power source is capable of continuous operation for a long period, but very heavy in total weight. The electric torch, therefore, must also be securely fixed when not in use. Furthermore, this electric torch must be set and securely fixed in place not only when not in use but also when used as a light.

An electric torch equipped with a holding fixture which meets the above-mentioned requirement is described in patent document 1. This electric torch is equipped with a ring-shaped strap serving as a holding fixture which is attached to the electric torch that the strap can move in a longitudinal direction of the electric torch. The electric torch has a lighting unit (midget lamp) provided on one longitudinal end side of the electric torch. When the strap is hooked on a protrusion so as to suspend the electric torch, the electric torch can be held stationary in this state. The electric torch may be used (i.e., the lighting unit is turned on) while kept in this state. However, by adjusting the longitudinal position of the strap, the direction (angle) of illumination by the lighting unit can be adjusted. In both cases of using and not using the electric torch, the electric torch can be fixed using the strap. The protrusion on which the strap is hooked can be formed on any given place, such as a wall.

### PRIOR ART DOCUMENTS

### PATENT DOCUMENTS

**Patent Document 1:** Japanese Patent Application Laid-Open Publication No. 2004-253692

However, according to the technique described in patent document 1, it is necessary to provide, to a surface of an electric torch, a large strap and a structure for allowing the strap to move in the longitudinal direction of the electric torch. Even if the strap is flexible, it is obvious that the strap provided on the surface of the electric torch becomes an obstacle to a worker who tries to carry (grip) the electric torch.

The holding fixture described in patent document 1 is attached to the electric torch. On the other hand, even if a strap the same in structure as the above holding fixture is attached to such a work implement as electric drill, it is obvious that this strap, i.e., the holding fixture becomes an obstacle to the work. If the strap is sufficiently reduced in size, it is possible to prevent the strap from becoming an obstacle to the work. In such a case, however, it is obvious that it is difficult to fix the work implement using the strap.

That is, it has been found that it is difficult to provide the holding fixture to the work implement so that the holding fixture can securely fix the work implement, and does not become an obstacle when the work implement is carried or used. Other examples are known in the prior art from US2005/0258203A1, US2002/0174521A1, GB2312188A and GB2423039A.

### SUMMARY OF THE INVENTION

The present invention was conceived in view of the above problems, and it is therefore an object of the invention to solve the above problems.

In accordance with one aspect of the present invention, there is provided a work implement having a holding fixture for fixing the work implement to a structural object, characterized in that the work implement comprises: a flexible wire; a hooking tool anchored to one end of the wire and hooked on the structural object; and a body to which the other end of the wire is attached.

In accordance with another aspect of the present invention, the hooking tool has the shape of "L".

In accordance with another aspect of the present invention, the work implement comprises a housing hole which extends in a depth direction, wherein in the housing hole, said other end of the wire is attached to the body so that the wire can move in a length direction of the housing hole.

In accordance with another aspect of the present invention, the wire is housed in the housing hole.

In accordance with another aspect of the present invention, the hooking tool is fitted in an opening part of the housing hole with the wire housed in the housing hole.

In accordance with another aspect of the present invention, the work implement comprises a lighting unit for emitting light.

In accordance with another aspect of the present invention, the work implement comprises a grip which is held by a worker when the work implement is carried by the worker, wherein a battery mounting unit on which a battery is mounted as an electric power source is provided to one end of the grip, the lighting unit is provided to the other end of the grip, and the housing hole is provided to the battery mounting unit.

In accordance with another aspect of the present invention, the lighting unit is rotatably attached to the grip.

In accordance with another aspect of the present invention, a battery mounting unit on which a battery is mounted as an electric power source is connected to a handle which is held by a worker when the work implement is used, and the housing hole is formed to extend from the battery mounting unit to the handle.

In accordance with another aspect of the present invention, the work implement comprises a handle which extends from the body having a motor, the handle being formed with the housing hole.

In accordance with another aspect of the present invention, the work implement comprises a body having a motor and an electric cable, the body being formed with the housing hole.

In accordance with another aspect of the present invention, said other end of the wire is provided with a stopper which stops the wire from slipping out of the housing hole.

In accordance with another aspect of the present invention, there is a work implement having a holding fixture for fixing the work implement to a structural object, characterized in that the work implement comprises: a flexible wire; a hooking tool anchored to one end of the wire and hooked on the structural object; and a housing hole in which the other end of the wire is housed, wherein the wire can be pulled out from the housing hole.

### EFFECTS OF THE INVENTION

According to the present invention, a holding fixture can securely fix a work implement, and does not become an obstacle when the work implement is carried or in used.

### GRIEF DESCRIPTION OF THE DRAWINGS

FIGS. 1A and 1B are sectional views corresponding to two states of a holding fixture for work implement in an electric torch according to a first embodiment of the present invention;
FIG. 2 is a top view of the electric torch according to the first embodiment of the present invention;
FIG. 3 is a side view showing a first example of a state in which the electric torch according to the first embodiment of the present invention set in place;
FIGS. 4A and 4B are a side view showing second and third examples with the electric torch according to the first embodiment of the present invention being fixed in place and in use;
FIG. 5 is a side view showing a fourth example with the electric torch according to the first embodiment of the present invention being fixed in place and in use;
FIG. 6 is a side view showing the configuration of one modified example of the holding fixture for work implement, which is used in the electric torch according to the first embodiment of the present invention;
FIG. 7 is a side view showing the configuration of the electric drill according to the second embodiment of the present invention; and
FIG. 8 is a side view showing the configuration of one modified example of the electric drill according to the second embodiment of the present invention.

### DESCRIPTION OF TIRE REFERRED EMBODIMENTS

Hereinafter, the configuration of a work implement equipped with a holding fixture for work implement according to one embodiment of the present invention will be described in detail. One example of the work implement is an electric torch which, when not in use and when used as a light, is set and fixed in place by using the holding fixture for work implement. Another example of the work implement is an electric drill , etc. which when not in use, is set and fixed in place using the holding fixture for work implement and when used, is shaped into a form to which the holding fixture for work implement is not an obstacle.

### (First Embodiment: Electric torch)

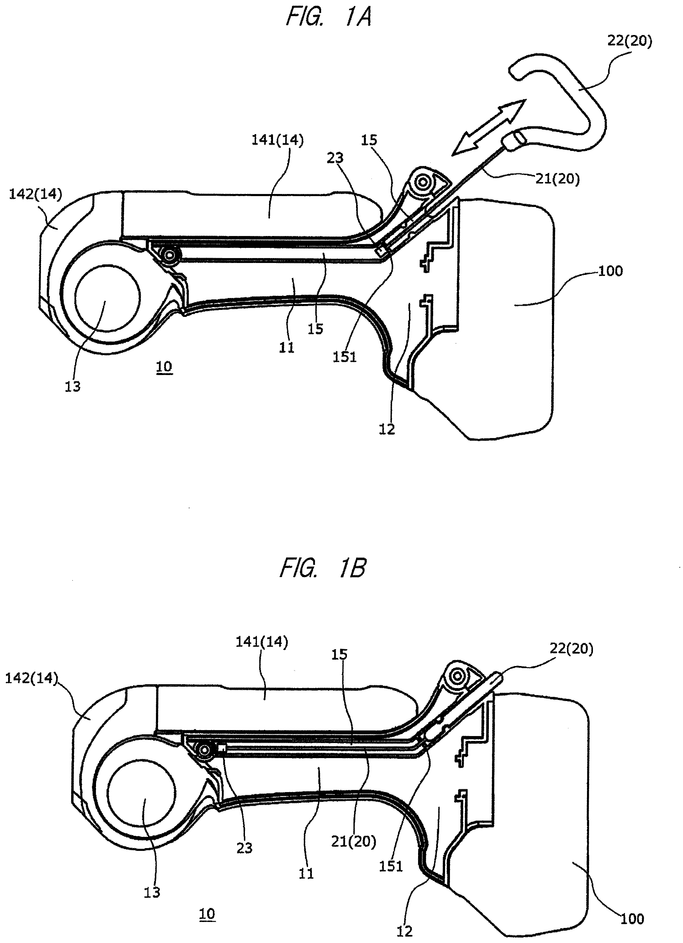

FIGS. 1A and 1B are sectional views showing the structure of an electric torch 10 according to a first embodiment, wherein FIGS. 1A and 1B show two states of a holding fixture (holding fixture for work implement) 20 attached to the electric torch 10. This electric torch 10 includes: a grip 11 made into a slender shape so that a worker can hold it easily; a battery mounting unit 12 provided on one end of the grip 11 (right side in FIGS. 1A and 1B) ; and a lighting unit 14 which rotates around a pivot shaft (first pivot shaft) 13 provided on the other end of the grip 11 (left side in FIGS. 1A and 1B). A battery 100 serving as an electric power source is mounted on the battery mounting unit 12. The battery 100 charged by an external charger is mounted on the battery mounting unit 12.

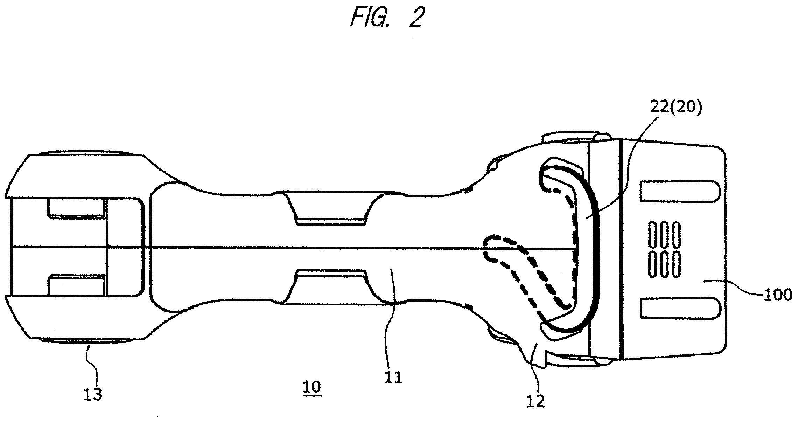

In the holding fixture 20 for the electric torch 10, a flexible wire 21 is attached in a thin and long housing hole 15 extending from the battery mounting unit 12 to the grip 11, and movable in the longitudinal direction of the housing hole 15, and the housing hole 15 may be curved as needed basis. Furthermore, one end of the wire 21 (right side end in FIGS. 1A and 1B) is separated from the electric torch 10, and a L-shaped hook 22 is anchored to said one end of the wire 21 as a hooking tool for fixing (hooking) the electric torch 10 by its own weight. The worker can pull out the hook 22 (wire 21) of the housing hole 15, and use the hook 22 for fixing the electric torch 10. On the other hand, by housing the wire 21 and part of the hook 22 in the housing hole 15, it is possible to prevent the wire 21 and hook 22 from becoming an obstacle to the worker when the worker tries to hold the grip 11. FIG. 1A is a longitudinal sectional view of the housing hole 15 with the hook 22 (wire 21) pulled out of the housing hole 15. FIG. 1B is a longitudinal sectional view of the housing hole 15 with the hook 22 (wire 21) housed in the housing hole 15. For convenience, the electric torch 10 is shown in FIG. 1A with the hook 22 rotated at 90 degrees around the wire 21 from FIG. 1B. FIG. 2 is a top view showing the electric torch 10 shown in FIG. 1B with the lighting unit 14 omitted from FIG. 1B and not shown.

In order to attach the wire 21 to the body of the electric torch 10 so that the wire 21 is movable in its longitudinal direction in the housing hole 15, an inner wall 151 is formed in the middle of the housing hole 15 in its longitudinal direction, and the wire 21 extends through the inner wall 151 of the housing hole 15. A deep side part (left) of the housing hole 15 extends inward from the inner wall 151, the other end (left end in FIGS. 1A and 1B) of the wire 21 is located in said deep side part of the housing hole 15, and a wire termination (stopper) 23 larger in outer diameter than the wire 21 is fitted to said other end of the wire 21. The hole defined by the inner wall 151, through which the wire 21 passes, is larger than the outer diameter of the wire 21, and smaller than the outer diameter of the wire termination 23. Therefore, when the wire 21 is pulled out of the housing hole 15, the wire termination 23 is ultimately stopped by the inner wall 151. Therefore, the holding fixture 20 can be attached to the body of the electric torch 10, and the holding fixture 20 is movable in the longitudinal direction of the wire 21.

Furthermore, the opening part of the housing hole 15 on the battery mounting unit 12 is widened so that the hook 22 can be fitted in the opening part of the housing hole 15. Therefore, as shown in FIGS. 1B and 2, the wire 21 is housed in the housing hole 15 and the hook 22 is fitted and fixed in the opening part of the housing hole 15. In this case, when the wire 21 is housed in the housing hole 15, only the part of the hook 22 projects from the battery mounting unit 12 (body of the electric torch 10). Therefore, when the worker carries the electric torch 10, the hook 22 (holding fixture 20) is hardly obstructive to the worker. By pulling out the projecting part of the hook 22, the worker is able to put the hook 22 in its form of FIG. 1A.

The lighting unit 14 is provided with a main light 141 and a flash 142. FIGS. 1A and 1B show the electric torch with the lighting unit 14 rotated around the pivot shaft 13 and folded along the grip 11. In this state, the main light 141 emits light in an upward direction in FIGS. 1A and 1B. The main light 141 is composed of an array of a number of LEDs (light emitting diodes) and serves as a main light emitting unit in the electric torch 10. A direction in which light is emitted from the main light 141 can be adjusted by adjusting a rotation angle of the main light 141 around the pivot shaft 13. Furthermore, with the main light 141 rotated and separated from the grip 11, the main light 141 can be rotated around a pivot shaft (second pivot shaft, not shown) which is perpendicular to the pivot shaft 13, and which extends along the longitudinal direction of the main light 141 of FIGS. 1A and 1B, with respect to the flash 142. Therefore, since the lighting unit 14 is rotated around the first pivot shaft 13 and the second pivot shaft, the main light 141 can emit light in every direction around the grip 11. It is preferable that the lighting unit 14 be rotated around the first pivot shaft 13 and the second pivot shaft while rotation resistance acts on the rotation of the lighting unit 14. This rotation resistance allows the lighting unit 14 to rotate only when a rotative force equal to or larger than a predetermined level acts on the lighting unit 14, and allows the lighting unit 14 to be fixed at a desired angle. In another case, a fixing mechanism may be used as a mechanism which allows the lighting unit 14 to be rotated with a small force, but allows the lighting unit 14 to be fixed at a desired angle.

On the other hand, the flash 142 provided on the left to the first pivot shaft 13 of FIGS. 1A and 1B turns on or turns on/off to emit light smaller than that of the main light 141 in a direction different from that of the main light 141 (left side in FIGS. 1A and 1B). The flash 142 is used as an auxiliary light. Turning on and off of the flash 142 can be controlled by, for example, operating the pivot shaft 13 of FIGS. 1A and 1B as a switch. In this case, the worker pushes the pivot shaft 13 in the direction perpendicular to the paper surface in FIGS. 1A and 1B to alternately switch on and off the flash 142. In another case, an on/off switch for turning on and off of the flash 142 may be provided on a part other than the pivot shaft 13. Additionally, a switch for turning on and off of the main light 141 can also be controlled by the pivot shaft 13 serving as a switch, and may be controlled by a separately provided switch.

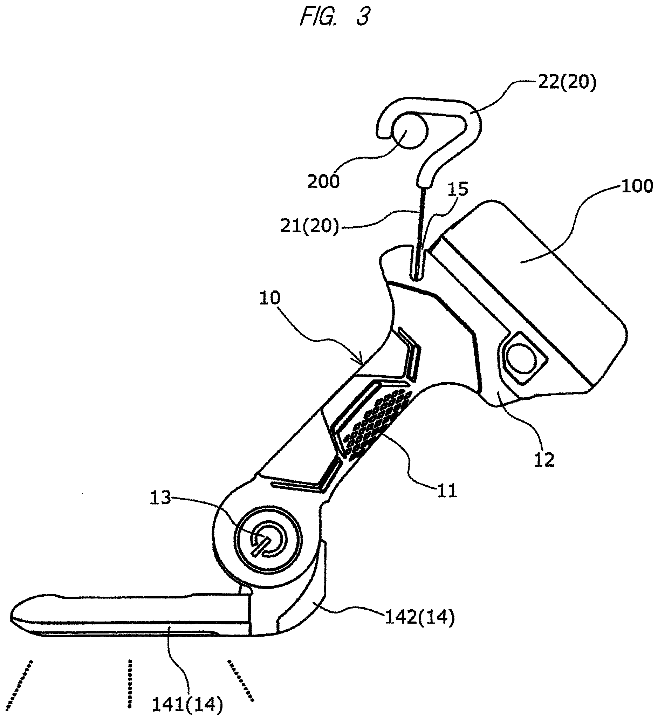

With the hook 22 pulled out of the housing hole 15, the hook 22 can be hooked on various places, such as a protrusion and the upper part of a wall surface, by the weight of the electric torch 10 to set the electric torch 10 in place. FIG. 3 is a side view showing the form (first example) of the electric torch 10 set and fixed in place. FIG. 3 shows a case where the hook 22 pulled out of the housing hole 15 is hooked on a pin 200 anchored to a wall surface (not shown) to put the electric torch 10 in a state of suspension. In this state, the lighting unit 14 is rotated to allow it to illuminate the lower side perpendicular to the lighting unit 14. By its own weight, the electric torch 10 is set and fixed in place in its state of FIG. 3. A direction in which the main light 141 illuminates can be adjusted by adjusting the rotation angle of the lighting unit 14.

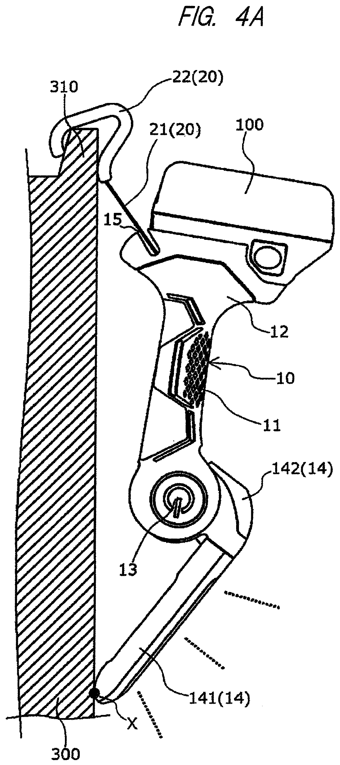

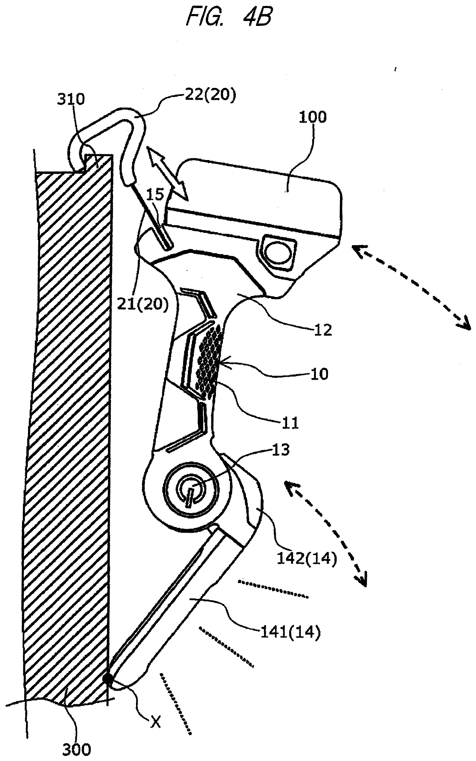

Furthermore, having the shape of "L", the hook 22 can be hooked on a structural object different in shape from the pin 200. Similar to FIG. 3, FIGS. 4A and 4B show the form of the electric torch 10 set and fixed in place on a fence 300 (second example (FIG. 4A) and third example (FIG. 4B). In FIG. 4A, the hook 22 is hooked on a fence-side hooking portion 310 formed on the top of the fence 300 to set the electric torch 10 in place. In the case of FIG. 4A, the electric torch 10 is fixed on the fence 300 by the hook 22 hooked on the fence-side hooking portion 310 and the front end "X" of the lighting unit 14. In the case of FIG. 3, the electric torch 10 may swing on the pin 200 (to the left and right in FIG. 3), so that the direction of illumination by the lighting unit 14 may become shaky. In the case of FIGS. 4A and 4B, in contrast, the swing of the electric torch 10 is suppressed, so that the direction of illumination is kept constant.

To ensure that the battery 100 incorporated in the electric torch 10 is compatible with various electric tools (electric drill 40, etc. which will be described later) used together with the electric torch 10 during use, a battery that commonly powers those electric tools is used preferably as the battery 100. In this case, increasing the capacity of the battery 100 extends its consecutive service period. However, because the battery 100 is heavier than a dry battery, etc., the weight of the battery 100 with the increased capacity accounts for a higher percentage of the total weight of the electric torch 10. Therefore, in the case of FIGS. 4A and 4B, the gravity of the battery 100 acts clockwise around the part denoted by X in FIGS. 4A and 4B, thus acting in a direction in which the hook 22 is hooked more firmly on the fence-side hooking portion 310. In this state, the lighting unit 14 below the battery 100 illuminates the lower side, in which case the electric torch 10 serves as lighting equipment in a particularly preferable manner. When the lighting unit 14 is disposed opposite to the heavy battery 100 (battery mounting unit 12), therefore, the above configuration in which the holding fixture 20 is disposed closer to the battery mounting unit 12 is particularly effective. By adjusting the angle of the lighting unit 14 against the grip 11, the direction of illumination is adjusted easily.

In the configuration in which sliding friction acts on the wire 21 when it moves lengthwise in the housing hole 15, the extent of pullout of the hook 22 (wire 21) can be fixed to a desired length. FIG. 4B shows the form of the electric torch 10 in a case where the extent of pullout of the hook 22 in the state of FIG. 4A is adjusted. In this case, the angle of placement of the electric torch 10 as a whole against the fence 300 can be adjusted around the part X of the front end of the lighting unit 14 in contact with the fence 300. In this case, in the same manner as adjustment of rotation of the lighting unit 14, the extent of pullout of the wire 21 is changed only when a force of a given size or more acts on the wire 21. The wire 21 is allowed to move freely in its longitudinal direction in the housing hole 15. This free move of the wire 21 is ensured also in the case of using a fixing mechanism that fixes the extent of pullout of the wire 21 from the housing hole 21 to an arbitrary extent.

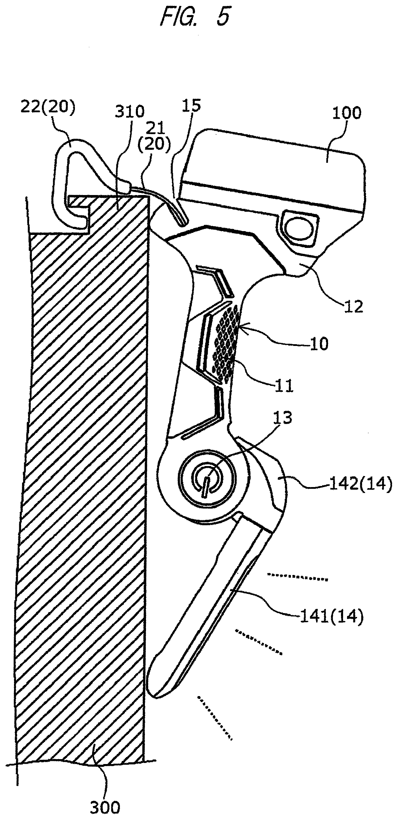

Furthermore, the wire 21 is flexible. Therefore, in the case of FIG. 5 (fourth example), the electric torch 10 can be set and fixed in place on the fence 300 with the flexed wire 21. In this case, since the top and bottom of the electric torch 10 are kept in contact with the fence 300, the electric torch 10 is set and securely fixed in place, and kept from being swung. Furthermore, by arbitrarily adjusting the extent of pullout of the wire 21 and giving the wire 21 flexible property allows properly determining the angle of placement of the electric torch 10 against the fence 300 and improves a degree of freedom in determining the form of the electric torch 10 when it is set and fixed in place.

The bent housing hole 15 is formed in the above electric torch 10. In the above example, as shown in FIGS. 1A and 1B, the housing hole 15 bends after extends from the right side to the lower left side, and then extends horizontally. This bent shape can be determined properly according to the shape of the work implement with the holding fixture 20 attached thereto. The grip 11 houses therein a cable (not shown) extending from the interior of the battery mounting unit 12. The bent shape of the housing hole 15 may be determined so that the cable and the housing hole 15 do not interfere with each other. When the shape of the housing hole 15 is determined, the length of the housing hole 15 corresponding to the length of the wire 21 must be secured in order to house the wire 21 in the housing hole 15. The length of the housing hole 15 may be increased by giving the housing hole 15 a bent shape to make use of a dead space in the body of the electric torch 10. The flexible wire 21 can be housed in the housing hole 15 having such a bent shape. While the structure shown FIGS. 1A and 1B includes the housing hole 15 bent at one spot, a housing hole bent at multiple spots or curved gradually may also be used. In such a case, the shape of the housing hole can also be determined properly according to the shape or structure of the work implement and the flexible wire can be housed in the housing hole in the same manner as described above. In other words, making the wire 21 out of a material that can be shaped flexibly (flexible material) eliminates the need of giving the housing hole 15 a straight shape. In FIG. 1A, no housing hole 15 needs to be formed on the part of grip 11 on a longitudinal extension line from the housing hole 15 located on the battery mounting unit 12 and the housing hole 15 can be formed along the long and narrow grip 11. Therefore, the size of the grip 11 in its radial direction (vertical direction in FIGS. 1A and 1B) is kept small.

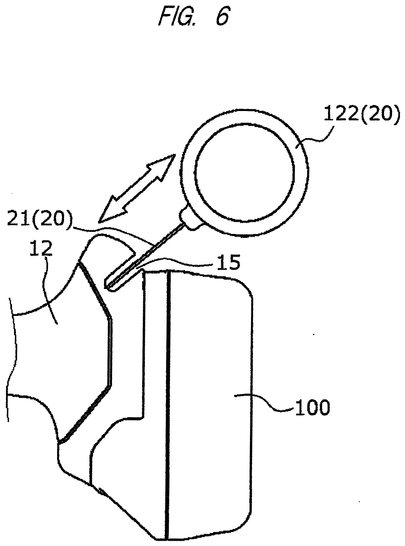

In the above examples, the L-shaped hook 22 is used as a hooking tool. However, a hooking tool of a different shape may also be used. FIG. 6 shows the configuration of components around the wire 21 for a case where an annular ring 122 is used in place of the hook 22. It is obvious that in the same manner as the hook 22, the ring 122 can be fitted and fixed in the opening part of the housing hole 15 when the wire 21 is pulled into the housing hole 15.

When the ring 122 is used as the hooking tool, for example, in the case of hooking the hooking tool on the pin 200 of FIG. 3, the ring 122 is hooked more securely on the pin 200 than the hook 22. On the other hand, in the case of hooking the hooking tool on the fence-side hooking portion 310 of FIGS. 4A, 4B and 5, the hook 22 is hooked more securely than the ring 122. In this manner, a hooking tool of any given shape may be used, provided that the hooking tool can be hooked on some sorts of structures. In any case, it is obvious that the hooking tool can be fitted and fixed in the opening part of the housing hole when the wire is pulled into the housing hole.

An electric torch to be used during work may be placed above a work site so as to illuminate the work site below the electric torch. In such a case, the electric torch 10 set and fixed in place by hooking the hooking tool (hook 22) on the top of the fence 300, as shown in FIGS. 4A, 4B and 5, is used preferably. In the case of FIGS. 4A, 4B and 5, the fence 300 is provided with the fence-side hooking portion 310 for hooking the hook 22, and it is obvious that a small protrusion or corner formed on the top of the fence 300 may be used in place of the fence-side hooking portion 310. Furthermore, even if the top face of the fence 300 is flat, and not provided with such a protrusion, the electric torch 10 can be set and fixed in place in the same form as shown in FIGS. 4A, 4B and 5 if the friction between the hook 22 and the top face of the fence 300 is large. In other words, even if no particular structural element for hooking the hook 22 is formed, the electric torch 10 having the holding fixture 20 can be set and fixed in place on many types of structures (fence, etc.).

### (Second Embodiment: Electric Drill)

As described above, the holding fixture is used preferably for the electric torch. This holding fixture can be attached to any given work implement, and when the work implement is not in use, can be set and fixed in place easily and securely on a fence, etc. A case in which an electric drill is provided with the above holding fixture will be then described.

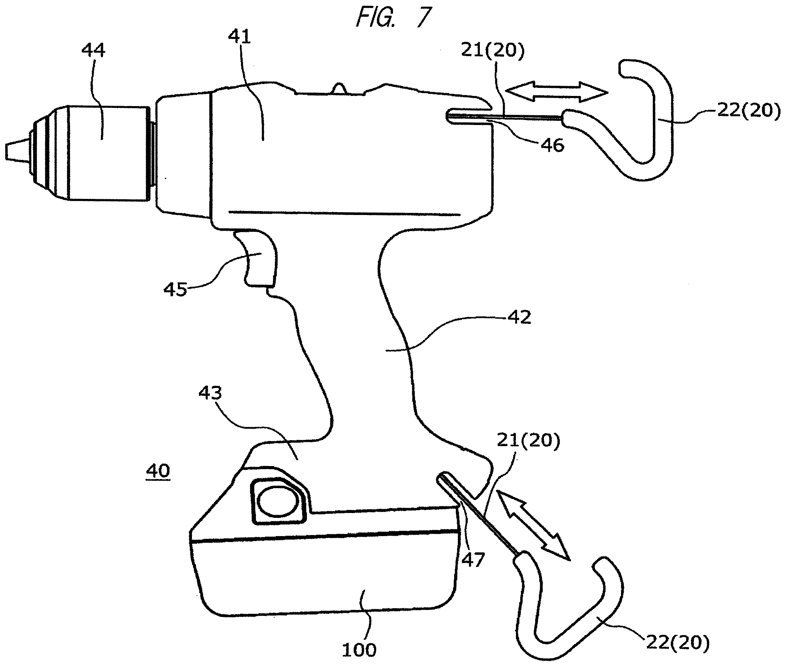

FIG. 7 is a side view showing the configuration of an electric drill 40 which is similar to the electric torch 10, and the electric drill 40 has the battery 100 serving as an electric power source. According to the electric drill 40, a handle 42 held by the worker during use is formed on the lower side of an electric drill body 41 containing a built-in motor (not shown) which rotates a spindle (not shown) . A battery mounting unit 43 is connected to the lower end of the handle 42, and the battery 100 is attached to the lower end of the battery mounting unit 43. The spindle has a chuck 44 fixed thereto, and a drill bit (not shown) is attached to the chuck 44 and used for drilling work. A trigger switch 45 is provided to the front part (closer to the drill bit) of the handle 42. When the worker holding the handle 42 pulls the trigger switch 45 to the right side in FIG. 7, so that the motor starts rotating, causing the drill bit to spin.

In the example of FIG. 7, a housing hole 46 the same as the housing hole 15, the wire 21, and the hook 22 are arranged on the right side of the electric drill body 41 and a housing hole 47 the same as the housing hole 15, the wire 21, and the hook 22 are arranged on the right side of the battery mounting unit 43. That is, in FIG. 7, it includes two holding fixtures 20. However, in fact, the effect can be sufficiently achieved by any one of the above holding fixtures 20. Although components such as motor, electric cables connected to the motor, electric circuit, and gear box (not shown) are built in the electric drill body 41, the housing hole 46 may be bent in the electric drill body 41 so that the housing hole 46 does not interfere with those built-in components. since the wire 21 and hook 22 is housed in the housing hole 46 as needed base, it is possible to prevent the wire 21 and hook 22 from becoming an obstacle to the work when the electric drill 40 is used. Therefore, the wire 21 and hook 22 can be pulled out of the housing hole 46, and used in the same manner as that shown in FIGS. 3 to 5.

The housing hole 47 formed in the battery mounting unit 43 is given a bent shape extending from the battery mounting unit 43 to the handle 42. In this respect, the housing hole 47 is regarded as the same shape as the housing hole 15 of the electric torch 10 that extends from the battery mounting unit 12 to the grip 11. The wire 21 and hook 22 can be housed in the housing hole 47 and pulled out of the housing hole 47 to set the electric drill 40 in place in the same manner as described above.

Using the holding fixture 20 makes it easier to set the electric drill 40 in place on a fence, wall, etc., when the electric drill 40 is not in use.

As described above, even if only one of a set of the housing hole 46 and the wire 21 and hook 22 housed therein and a set of the housing hole 47 and the wire 21 and hook 22 housed therein is provided, the provided set serves sufficiently as the holding fixture. A combination of the housing holes 46 and 47 and the holding fixture 20 merely occupies a tiny area of the electric drill 40, and therefore does not become an obstacle while in use. For this reason, two holding fixtures 20, as in the case of FIG. 7, or three or more holding fixtures 20 may be provided. In such a case, the holding fixture to be used for setting and fixing the electric drill 40 in place can be selected out of a combination of the holding fixtures. This further improves a degree of freedom in setting and fixing the electric drill 40 in place.

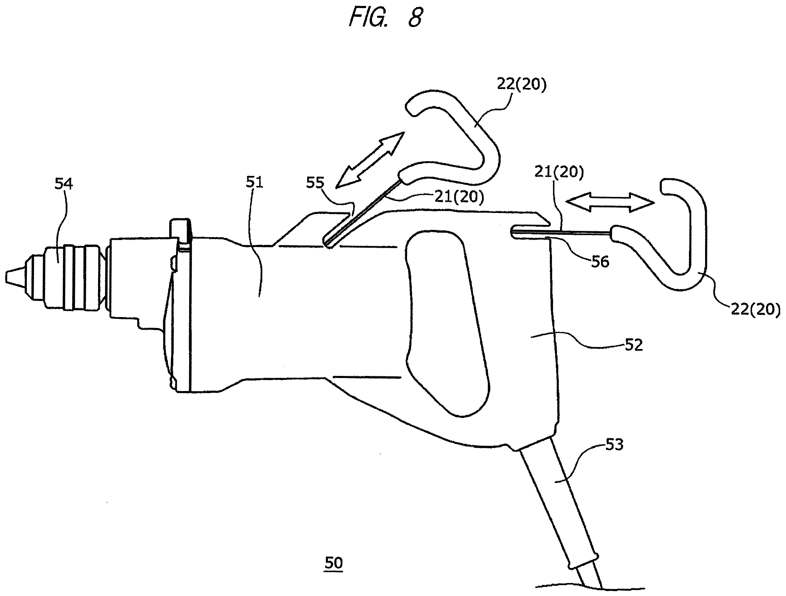

FIG. 8 is a side view showing the configuration of an electric drill 50 using a commercial AC power source in place of the above battery 100. According to the electric drill 50, a handle 52 which is held by the worker during use is formed on the right (rear) side of an electric drill body (body) 51 containing a built-in motor (not shown) which rotates a spindle (not shown). The handle 52 is connected to upper and lower parts of the electric drill body 52 so that an airspace is formed between the handle 52 and the electric drill body 51, and allows the worker to put his or her fingers therein. A power cord 53 is connected to the lower end of the handle 52, and has one end provided with a power plug (not shown) . A chuck 54 is fixed to the spindle, and a drill bit (not shown) is attached to the chuck 54 and used for drilling work. The handle 52 is provided with a trigger switch (not shown). When the worker connects the power plug to the commercial AC power source and pulls the trigger switch while holding the handle 52, the motor starts rotating, and causing the drill bit to spin.

In this electric drill 50, the electric drill body 51 has an upper part (opposite to the power cord 53) formed with a housing hole 55 the same as the above housing hole, and a rear part (right side in FIG. 8) formed with a housing hole 56 the same as the above housing hole, and holding fixtures 20 (wire 21 and hook 22) are attached and housed in it. In this case, each shape of the housing holes 55 and 56 is determined arbitrarily as described in the above case. For example, the housing hole 55 may be formed so as not to interfere with the motor, etc., provided inside the electric drill body 51. The housing hole 56 formed in the handle 52 may be structured so as to extend horizontally from right to left in FIG. 8, and then bend at a 90-degree angle toward the lower side in FIG. 8 along the handle 52.

In this configuration, since the handle 52 is connected to the rear part of the electric drill body 51, if the housing hole 55 is formed in the rear part of the electric drill body 51 in the same manner as the housing hole 46 of the electric drill 40, the holding fixture 20 (hook 22) interferes with the handle 52. Therefore, in order to avoid this interference, the housing hole 55 may be formed on the top face side of the electric drill body 51. When the housing hole 55 is formed on the top face side of the electric drill body 51 containing the built-in motor, etc., the housing hole 55 is given a bent or curved shape in the electric drill body 51. This secures the sufficient length of the housing hole 55, thereby secures the sufficient length of the wire 21. Therefore, a degree of freedom in determining the form of the electric drill 50 is improved when the electric drill 50 is set and fixed in place using the holding fixture 20.

As described in the above embodiments, the holding fixture for work implement can be applied to various work implements. The holding fixture does not becomes an obstacle to the use of the work implement, can be used to set and fix the work implement easily in place, and it is possible to improve a degree of freedom in determining the form of the work implement when the work implement is set and fixed in place. Furthermore, the housing hole and the wire can be provided on various parts of the work implement without negatively affecting the function of the work implement.

While the work implement equipped with the electric power source (battery, commercial AC power source) is described in the above examples, it is obvious that the holding fixture for work implement applies effectively also to a work implement (impact wrench, etc.) which is not equipped with the electric power source and is actuated with, for example, high-pressure air. In such a case, a housing hole that does not interfere with high-pressure piping, etc. in the work implement body is formed and the holding fixture for work implement is fitted in the housing hole in the same manner as described above.

Additionally, according to the above examples, when the wire is housed in the housing hole, the hooking tool is fitted and fixed in the opening part of the housing hole. This configuration, however, is not necessary in a case where the hooking tool not fixed in the opening part of the housing hole is not an obstacle to work.

Furthermore, according to the above examples, the wire is attached and housed in the housing hole. However, if the wire and the holding fixture (hook, etc.) are being exposed without being housed in the housing hole, and they do not become obstacles to work in their exposed state, it is not necessary to provide the housing hole. In such a case, the other end of the wire can be attached to the surface of the work implement.

## Claims

1. A work implement (10) having a holding fixture (20) for fixing the work implement to a structural object (300), **characterized in that**:
the work implement is operated by an electric battery or a commercial electric power source, and the work implement comprises:
a flexible wire (21);
a hooking tool (22) anchored to one end of the wire and hooked on the structural object;
a body to which the other end of the wire is attached; and
a housing hole in which the wire is housed,
wherein the work implement is constructed so that the wire can be pulled out from the housing hole,
wherein in the housing hole, the other end of the wire is attached to the work implement so that the wire can move in a length direction of the housing hole.

2. The work implement according to claim 1, wherein the hooking tool has the shape of "L".

3. The work implement according to claim 1, wherein the hooking tool is fitted in an opening part of the housing hole with the wire housed in the housing hole.

4. The work implement according to claim 1, comprising a lighting unit for emitting light.

5. The work implement according to claim 4, comprising:
a grip which is held by a worker when the work implement is carried by the worker, wherein
a battery mounting unit (12) on which a battery is mounted as an electric power source is provided to one end of the grip, the lighting unit is provided to the other end of the grip, and the housing hole is provided to the battery mounting unit.

6. The work implement according to claim 5, wherein the lighting unit is rotatably attached to the grip.

7. The work implement according to claim 1, wherein a battery mounting unit on which a battery is mounted as an electric power source is connected to a handle (42) which is held by a worker when the work implement is used, and
the housing hole is formed to extend from the battery mounting unit to the handle.

8. The work implement according to claim 1, comprising a handle which extends from the body having a motor, the handle being formed with the housing hole.

9. The work implement according to claim 1, comprising a body having a motor and an electric cable, the body being formed with the housing hole.

10. The work implement according to claim 1, wherein said other end of the wire is provided with a stopper which stops the wire from slipping out of the housing hole.

## Patentansprüche

1. Werkzeug (10) mit einer Haltefixierung (20) zum Fixieren des Werkzeugs an einem Bauobjekt (300), **dadurch gekennzeichnet, dass**:
das Werkzeug durch eine elektrische Batterie oder ein kommerzielles Stromversorgungsnetz betrieben wird, und wobei das Werkzeug enthält:
einen flexiblen Draht (21);
einen Haken (22), welcher mit einem Ende von dem Draht verbunden ist und am Bauobjekt eingehakt ist;
einen Körper, mit welchem das weitere Ende von dem Draht verbunden ist; und
ein Gehäuseloch, in welches der Draht aufgenommen ist,
wobei das Werkzeug derart aufgebaut ist, dass der Draht aus dem Gehäuseloch herausgezogen werden kann,
wobei in dem Gehäuseloch das weitere Ende von dem Draht an dem Werkzeug derart angebracht ist, dass sich der Draht in einer Längsrichtung des Gehäuseloches bewegen kann.

2. Werkzeug nach Anspruch 1, bei welchem der Haken eine "L"-Form hat.

3. Werkzeug nach Anspruch 1, bei welchem der Haken in einem Öffnungsabschnitt von dem Gehäuseloch mit dem im Gehäuseloch untergebrachten Draht eingepasst ist.

4. Werkzeug nach Anspruch 1, umfassend eine Beleuchtungseinheit zum Ausstrahlen von Licht.

5. Werkzeug nach Anspruch 4, welches enthält:
einen Griff, welcher durch einen Bediener gehalten wird, wenn das Werkzeug vom Bediener getragen wird, wobei
eine Batterieeinrichtungseinheit (12), an welcher eine Batterie als eine elektrische Energiequelle eingerichtet ist, an einem Ende von dem Griff bereitgestellt ist, wobei die Beleuchtungseinheit an dem weiteren Ende von dem Griff bereitgestellt ist, und wobei das Gehäuseloch an der Batterieeinrichtungseinheit bereitgestellt ist.

6. Werkzeug nach Anspruch 5, bei welchem die Beleuchtungseinheit drehbar am Griff angebracht ist.

7. Werkzeug nach Anspruch 1, bei welchem eine Batterieeinrichtungseinheit, an welcher eine Batterie als eine elektrische Energiequelle eingerichtet ist, mit einem Griffstück (42) verbunden ist, welches von einem Bediener gehalten wird, wenn das Werkzeug verwendet ist, und
wobei das Gehäuseloch derart ausgebildet ist, dass es sich von der Batterieeinrichtungseinheit zum Griffstück erstreckt.

8. Werkzeug nach Anspruch 1, umfassend ein Griffstück, welches sich von dem Körper, welcher einen Motor enthält, erstreckt, wobei das Griffstück mit dem Gehäuseloch ausgebildet ist.

9. Werkzeug nach Anspruch 1, umfassend einen Körper, welcher einen Motor und ein Elektrokabel enthält, wobei der Körper mit dem Gehäuseloch ausgebildet ist.

10. Werkzeug nach Anspruch 1, bei welchem das weitere Ende von dem Draht mit einer Stoppeinrichtung bereitgestellt ist, welche den Draht davon abhält, aus dem Gehäuseloch herauszufahren.

## Revendications

1. Outil de travail (10) ayant une monture de maintien (20) pour fixer l'outil de travail sur un objet structurel (300), **caractérisé en ce que** :
l'outil de travail est amené à fonctionner par une batterie électrique ou par une source de puissance électrique commerciale, et l'outil de travail comprend :
un fil flexible (21) ;
un outil d'accrochage (22) est ancré à une extrémité du fil et accroché sur l'objet structurel ;
un corps sur lequel est attachée l'autre extrémité du fil ; et
un trou de logement dans lequel le fil est logé,
dans lequel l'outil de travail est conçu de telle façon que le fil peut être tiré hors du trou de logement,
dans lequel, dans le trou de logement, l'autre extrémité du fil est attachée à l'outil de travail de telle façon que le fil peut se déplacer dans une direction en longueur du trou de logement.

2. Outil de travail selon la revendication 1, dans lequel l'outil d'accrochage a la forme d'un "L".

3. Outil de travail selon la revendication 1, dans lequel l'outil d'accrochage est engagé dans une partie ouverte du trou de logement avec le fil logé dans le trou de logement.

4. Outil de travail selon la revendication 1, comprenant une unité d'éclairage pour émettre de la lumière.

5. Outil de travail selon la revendication 4, comprenant :
une poignée qui est tenue par un opérateur quand l'outil de travail est porté par l'opérateur, dans lequel
une unité de montage de batterie (12), sur laquelle une batterie et montée à titre de source de puissance électrique, est prévue à une extrémité de la poignée, l'unité d'éclairage est prévue à l'autre extrémité de la poignée, et le trou de logement est prévu sur l'unité de montage de batterie.

6. Outil de travail selon la revendication 5, dans lequel l'unité d'éclairage est attachée en rotation sur la poignée.

7. Outil de travail selon la revendication 1, dans lequel une unité de montage de batterie sur laquelle une batterie est montée à titre de source de puissance électrique est connectée à une manette (42) qui est tenue par un opérateur lorsque l'outil de travail est utilisé, et
le trou de logement est formé de manière à s'étendre depuis l'unité de montage de batterie jusqu'à la manette.

8. Outil de travail selon la revendication 1, comprenant une manette qui s'étend depuis le corps ayant un moteur, la manette étant formée avec le trou de logement.

9. Outil de travail selon la revendication 1, comprenant un corps ayant un moteur et un câble électrique, le corps étant formé avec le trou de logement.

10. Outil de travail selon la revendication 1, dans lequel ladite autre extrémité du fil est dotée d'un arrêt qui arrête le fil et l'empêche de glisser hors du trou de logement.
